# EUROPEAN PATENT APPLICATION

(11) **EP 1 755 007 A2**
(43) Date of publication of application: **21.02.2007**
(21) Application number: 06015872.2
(22) Date of filing: 31.07.2006
(51) Int. Cl.: G03H 1/00, G06K 19/06, G03H 1/20

(54) **Information-recorded medium containing a holographically-recorded bar code and associated methods**

(30) Priority: 19.08.2005 US 709551 P; 24.08.2005 US 710838 P
(71) Applicant: E.I. DUPONT DE NEMOURS AND COMPANY, Wilmington, Delaware 19898 (US)
(72) Inventor: Molteni, William J., Nibley, Utah 84321 (US)
(74) Representative: Hughes, Andrea Michelle

(57) **Abstract**

An information-recorded medium that contains a hologram of a bar code (704) and a method for using this medium to achieve enhanced security and authentication of bar code readings in commerce are described. The holographically-recorded bar code is virtually impossible to copy by non-holographic means and is readable using conventional bar code scanners that are currently in use. The holographically-recorded bar code can be made either visible or invisible to the human eye and can be made responsive to electromagnetic radiation in the visible, ultraviolet, and infrared regions of the spectrum.

## Description

### FIELD OF THE INVENTION

This invention pertains to an information-recorded medium comprised of a holographically-recorded bar code, which bar code is readable using conventional bar code readers/scanners and yet which is very difficult to forge. This invention also pertains to associated methods. The medium and associated processes are especially useful as a security device and for purposes of authentication of bar codes in all types of commerce.

### BACKGROUND OF THE INVENTION

### Holography and Holograms

Holography is a form of optical information storage. The general principles are described in a number of references, e.g., "Photography by Laser" by E. N. Leith and J. Upatnieks in SCIENTIFIC AMERICAN, 212, No. 6, 24-35 (June, 1965). In brief, the object to be photographed or imaged is illuminated with collimated light, e.g., from a laser, and a light sensitive recording medium, e.g., a photographic plate, is positioned so as to receive light reflected from the object. Each point on the object reflects light to the entire recording medium, and each point on the medium receives light from the entire object. This beam of reflected light is known as the object beam. At the same time, a portion of the collimated light is beamed by a mirror directly to the medium, by passing the object. This beam is known as the reference beam. What is recorded on the recording medium is the interference pattern that results from the interaction of the reference beam and the object beam impinging on the medium. When the processed recording medium is subsequently illuminated and observed appropriately, the light from the illuminating source is diffracted by the hologram to reproduce the wave-front that originally reached the medium from the object, so that the hologram resembles a window through which the virtual image of the object is observed in full three-dimensional form, complete with parallax.

Holograms that are formed by allowing the reference and object beams to enter the recording medium from the same side are known as transmission holograms and are also known as front beam holograms. Interaction of the object and reference beams in the recording medium forms fringes of material with varying refractive indices which are normal or near normal to the plane of the recording medium. When the hologram is played back by viewing with transmitted light, these fringes diffract the light to produce the viewed virtual image. Such transmission holograms may be produced by methods which are well known in the art, such as those disclosed in U.S. Patent No. 3,506,327; U.S. Patent No. 3,838,903 and U.S. Patent No. 3,894,787, each of which is incorporated herein by reference.

Holograms formed by allowing the reference and object beams to enter the recording medium from opposite sides, so that they are traveling in approximately opposite directions, are known as reflection holograms and are also known as back beam holograms. Interaction of the object and reference beams in the recording medium forms fringes of material with varying refractive indices which are, approximately, planes parallel to the plane of the recording medium. When the hologram is played back these fringes act as mirrors reflecting incident light back to the viewer. Hence, the hologram is viewed in reflection rather than in transmission. Since the wavelength sensitivity of this type of hologram is very high, white light may be used for reconstruction. Reflection holograms produced by an off-axis process are disclosed in U.S. Patent No. 3,532,406, which is incorporated herein by reference.

### Bar Codes

There are many different barcode symbologies or languages that have been developed since the first bar codes appeared during the 1950s. At last count, there were about 225 known bar code symbologies; however only a small number of these symbologies are in current use. Linear, 1D (one dimensional as opposed to two dimensional bar codes discussed below) symbologies continue to be the most widely used type of bar code. The most common 1D symbologies are Code 39, introduced by the defense and automotive industries; the Universal Product Code (U.P.C.), first employed by the supermarket industry in the 1970s; Codabar, used early on by blood banks, Interleaved 2-of 5 (ITF), and Code 28.

Each symbology has its own rules for character (e.g. letter, number, other characters) and encodation as well as for other aspects such as printing and error checking. The various bar code symbologies differ in the way they encode data. For example, some only encode numbers, others encode numbers, letters, and a few punctuation characters; still others provide for encodation of the 128-character, and even 256-character, ASCII sets.

Bar code scanners are electro-optical systems that include a means of illuminating the symbol and then measuring light reflected from the symbol. The reflected light data is converted from analog to digital, in order to be processed by a decoder and then transmitted to a computer for analysis using bar code application software. Conventional scanners can be either handheld or fixed-mount.

There are three main types of hand held scanners: contact wands, CCD (charge-coupled device), and laser. A wand is a pen-shaped device with a light aperture tip that the user draws across the bar code. CCDE scanners that use a stationary flood of light (usually light emitting diodes (LEDs)) to reflect the symbol image back to an array of photosensors; these scanners have no moving parts. Laser scanners employ a beam created by a laser diode that is spread into a horizontal arc by means of a rapidly moving mirror.

The advantages of laser scanning include a larger field of view and also good depth of field, which averages 6 to 12 inches but can achieve distances of 35 feet (with special reflective long-range labels).

Fixed-mount scanners use either moving-beam laser or CCD technology. Laser fixed-mount scanners are in common use in many stores (e.g. grocery stores, and they are also used widely in work-in-process (WIP) manufacturing applications as well as in warehousing, distribution, and shipping applications.

Some bar code symbologies provide for encoding of only numeric data (U.P.C. and ITF, for example). Other symbologies provide for encoding of a greater range of characters, such as, for examples, all or part of the American National Standard Code for Information Interchange (ASCII) character set (e.g., Codes 39 and 128). The encoding of characters is done by the width of the bars, and in most cases, by the width of the spaces as well. As a scanning device is moved across the symbol, the width pattern of the bars and spaces is analyzed to extract the original encoded data.

The width of the narrowest bar or space is referred to as the X dimension. The X dimension dictates the width of all other bars and spaces, and ultimately the length of the bar code. The greater the X dimension, the more easily a bar code will scan; however, the tradeoff for easier scan-ability is a higher cost for bigger labels required with use of larger bar code labels.

For proper scanning, most bar codes have a quiet zone, i.e., clear space, at either end of the bar code. The width of the quiet zone should be at least 10 times the bar code's X dimension.

The accurate reading of a bar code using a scanner is significantly dependent upon aperture size and wavelength under which the scanner is operated and significantly affects reading grade results obtained. Key standards and specifications are given in these ISO (ISO/IEC 15416 - Bar Code Print Quality Test Specification - Linear), ANSI (ANSI X3.182 - Bar Code Print Quality Guideline), and CEN (EN 1635 Bar Coding - Bar Code Symbol Test Specifications) documents. Further information is available at:
International Organization for Standardization (ISO)
1, rue de Varembe, Case postale 56
CH-1211 Geneva 20, Switzerland
Phone: +41 22 749 01 11
Fax: +41 22 733 34 30
E-mail: central@iso.org
Web: http://www.iso.org

American National Standards Institute (ANSI)
New York, NY 10036
Phone: 212-642-4900
Fax: 212-398-0023
Web: http://www.ansi.org

Commission for European Normalization (CEN)
Avenue Herrmann-Debroux 40-42 B-1160
Brussels, Belgium
Phone: +32 2 661 1951
Web: http://www.cen.be

The above-referenced ISO, ANSI, and CEN documents give recommendations on selecting aperture diameter based on the X dimension of the bar code being verified for the best verification and scanning results. These recommendations of aperture diameters in relation to X dimensions are summarized below:

| Aperture Diameter | Aperture Diameter | X Dimension | X Dimension |
|---|---|---|---|
| (Mils) | (mm) | (inch) | (mm) |
| 3 | 0.075 | 0.004-0.007 | 0.100-0.180 |
| 5 | 0.125 | 0.0071-0.013 | 0.180-0.330 |
| 10 | 0.250 | 0.0131-0.025 | 0.330-0.635 |
| 20 | 0.500 | 0.0251 & | 0.635 & larger |
| | | larger | |

A recommended wavelength for a scanner is usually specified in an applicable industry application specification. However, if not specified, the wavelength should match the light source wavelength of the scanning equipment as close as possible. If aperture and/or wavelength are specified in an applicable industry application standard, these recommendations in the application standard take precedence over those recommendations in the ISO, ANSI, and CEN documents, even if some X dimension ranges do not agree with the ISO, ANSI, and CEN recommendations.

Furthermore, EAN.UCC general specifications recommend use of a 6-mil aperture (0.150 mm) for the verification of EAN/UPC symbols having an X dimension range between 10 mil (0.264 mm) and 26 mil (0.660 mm).

The above-referenced ISO, ANSI, and CEN documents recommend use of a circular aperture in scanning equipment.

Additional details concerning the above-referenced ISO, ANSI, and CEN documents can be found in "The Layman's Guide to ANSI, CEN, and ISO Bar Code Print Quality Documents", published by AIM, Inc. and available on their website. Additional details on AIM are as follows:
AIM, Inc.
634 Alpha Drive
Pittsburgh, PA 15238-2802
Phone: 412-963-8588
Fax: 412-963-8753
Web: www.aimglobal.org

In order for a bar code to be read accurately by current scanning equipment, the bar code must have an X dimension of a certain minimal value or higher. This minimal value is 6.7 mils according to a 2001 case study (Case Study - Alcon Laboratories, Reduced Space Symbology® for Small Healthcare Items from Print to Bedside, published in 2001 by the Uniform Code Council, Inc., obtained from the UCC's website). The following is a quote from a portion of Section 3.3, page 2, of this study: "After much dialogue among health care manufacturers, scanner manufacturers and the printers, it was determined that 6.7 mil (1 mil equals 0.001 inch) was the smallest "X" dimension that current scanning equipment could read accurately."

A bar code uses special characters at each end of the bar code, these special characters are called start and stop characters. These characters identify the symbology and also enable the scanner to read the symbol bidirectionally. Bar codes also often include a check digit at the end that is determined according to an algorithm based upon the preceding characters. The check digit validates that all characters have been decoded correctly.

At least some individual characters of linear bar code symbology consists of a number of bars and spaces. For example, bar code symbology for both the letter q and the number 9 consist of 19 bars and spaces. If one also includes a check digit code for these one character symbols, then the number of bars and spaces is 25, with the 6 additional being due to the check digit code. Thus for bar code with the smallest X dimension of 0.1 mm (see infra), the smallest possible length of this bar code of 1 character plus check digit code is 25 x 0.1 mm = 2.5 mm. Bar codes having additional digits will be longer. For examples, the bar code for 12 has 25 lines and spaces, and the bar code for 123456 has 31 lines and spaces.

Bars in a bar code having an X dimension of 0.1 mm are all visible to the human eye. To illustrate the veracity of this statement, the diameter of a human hair is approximately 1 mil, which is 0.001 inch or 0.00254 cm. Thus approximately 4 human hairs placed side by side would have a total thickness of around 0.1 mm and would certainly be visible to the human eye.

Most bar codes include an interpretation line - the encoded data in human readable characters directly below the symbol.

Further details on bar codes can be found at the following websites: http://www.ocr.ca/barcode/barcode.asp and http://www.aimglobal.org

There is a significant need for a more secure system of reading bar codes and establishing their authenticities than that described above for prior art systems. The invention provides a solution to this important need.

### SUMMARY OF THE INVENTION

The invention is directed to an information-recorded medium having a holographically-recorded bar code and a background found within a single exposed photosensitive layer, the bar code consisting of a plurality of parallel bars and spaces; and the bar code possessing a reconstruction wavelength λ, wherein the exposed photosensitive layer is obtained from exposure of the photosensitive layer to coherent actinic radiation and results from interferometrically recording an image into the photosensitive layer to produce the exposed photosensitive layer containing the holographically-recorded bar code.

The invention is further directed to the information-recorded medium having a holographically-recorded bar code and a background as described above wherein the bar code meets all standards specified from at least one professional industry organization relevant to bar code technology selected from the group consisting of UCC, AIM, ANSI, CEN, and ISO.

The invention is still further directed to information-recorded medium having a holographically-recorded bar code and a background as described above that is scan-able using conventional scanning equipment.

The invention is still further directed to a method for scanning a reconstructed image of a holographically-recorded bar code contained within an information-recorded medium as described above, wherein the bar code is scanned with a scanner and the bar code is read by the scanner.

The invention is still further directed to a method for making a master hologram comprising at least one holographically-recorded bar code, the method having the steps of:
a. obtaining a model of all element(s) that are to be in the master hologram, the element(s) comprising at least one bar code;
b. placing a first photosensitive film suitable for holographic recording between the model and a coherent light source, the first photosensitive film having a surface;
c. exposing the first photosensitive film with light from the coherent light source to record a first holographic image (H1) of the physical model, the first holographic image comprising at least one holographically-recorded bar code of the first holographic image;
d. inverting the first holographic image with respect to the coherent light source and removing the physical model;
e. placing a second photosensitive film suitable for holographic recording between the coherent light source and the first holographic image, the second photosensitive film being proximate to the first holographic image; and
f. exposing the second photosensitive film with light from the coherent light source to record a second holographic image (H2) as the master hologram, the second holographic image comprising at least one holographically-recorded bar code of the second holographic image as the master hologram.

### BRIEF DESCRIPTION OF THE DRAWINGS

FIG. 1 is an illustration of an embodiment of the production of a reflection (back-beam) hologram.
FIGS. 2A & 2B are illustrations of an enlarged cross section of a photographic plate illustrating an example of the arrangement of fringes in the emulsion of a transmission (front beam) hologram and reflection (back-beam) hologram.
FIG. 3 is an illustration of the reconstruction of an image from a reflection (back-beam) hologram.
FIG. 4 is an illustration of an arrangement for construction of a transmission (front-beam) or surface relief hologram.
FIG. 5 is an illustration of an arrangement useful in reconstructing a real orthoscopic image of a subject from a transmission (front-beam) hologram.
FIG. 6A-6D are four different examples of linear (one-dimensional) bar codes.
FIG. 7 is an illustration of holographic imaging to form a H1 hologram of bar code.
FIG. 8 is an illustration of holographic imaging to form a H2 hologram of bar code from a H1 hologram.
FIG. 9 is an illustration of continuous replication on a web of a master hologram of bar code using photopolymer copy film
FIG. 10 is an illustration of holographic imaging to form in one step a holographic image of bar code below the surface of a dichromated gelatin (DCG) plate.

### DETAILED DESCRIPTION OF THE INVENTION

The invention uses the innate security of holographic recording material making a bar code very difficult to copy and retain the look and qualities that holographic materials exhibit. However, at the same time no special reader is necessary. Most or all common bar code scanners can be used to read the codes and transfer their meaning to a computer's appropriate software.

### Holographic Imaging

Some embodiments of the invention utilize a holographic image manufactured by a volume reflection method used in the holographic industry for producing and reconstructing three-dimensional images from a hologram comprising forming a pattern of interference fringes on a photographic plate wherein the object-bearing beam and reference beam impinge on opposite sides of a photographic plate and reconstructing the image by illuminating the hologram with at least a partially collimated light source to view the reconstructed image. A partially collimated light source is a light source wherein at least some of the light is produced in a parallel beam of radiation. The reconstructed image may be used as a security device for authenticity verification. The light source may be the light of a laser or other monochromatic collimated source. The reflection (back-beam) hologram in this embodiment behaves as a selective reflecting filter, reconstructing the image in a narrow band of wavelengths that appear as a single color. The particular spectral band that is visible in the reconstruction depends markedly on the geometry of construction. The reconstruction color tends to shift to a shorter wavelength because of distortion or shrinkage of the emulsion that changes the spacing of the interference fringe pattern. However, it is possible to control the amount of spectral shift by adjustment of the processing variables during development. Also, it is possible that multiple images and images using radiation of more than one wavelength can be stored in the hologram. It is possible to reconstruct multicolor images from back-beam holograms viewed by reflection in white light, each color being selectively reflected from the hologram and combined in the image to yield a colored image that appears truly three-dimensional.

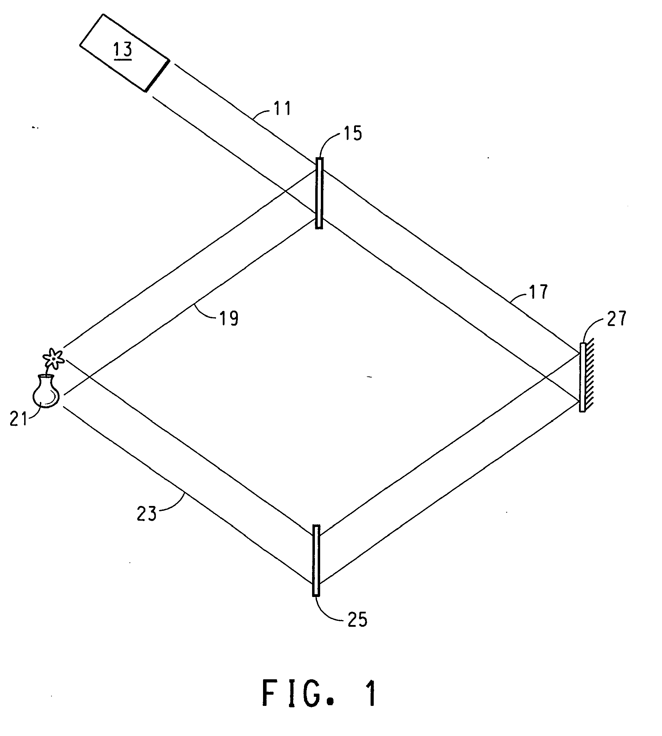

Further, referring to FIG. 1, the beam 11 from a source of collimated and coherent light 13 is divided by suitable means, such as a beam splitter 15, into a reference beam 17 and an incident beam 19. The incident beam 19 illuminates an object 21. The reflected light or object-bearing beam 23 from the object 21 passes to photographic plate 25. The reference beam 17 is directed onto the photographic plate 25 by suitable means such as a mirror 27, but strikes the plate 25 on the side opposite that is illuminated by the object-bearing beam 23. An interference pattern is produced and recorded in the photographic plate 25. Preferably the path lengths of the reference beam 17 and object-bearing beams (19 and 23) beginning at the beam splitter 15 are about equal, although if the light is reasonably coherent this is unnecessary. Coherent sources of light produce electromagnetic radiation in which two or more sets of waves have a constant phase relationship. Usually, coherent sources of light are coherent only over a certain distance.

The arrangement for bringing the two beams (object-bearing and reference beams) onto opposite sides of the recording device may of course be varied considerably. Two separate sources of light may be even used as long as they are "locked in phase" (i.e., they are coherent with each other); and, of course, the optical devices used for directing the various beams may be selected for convenience.

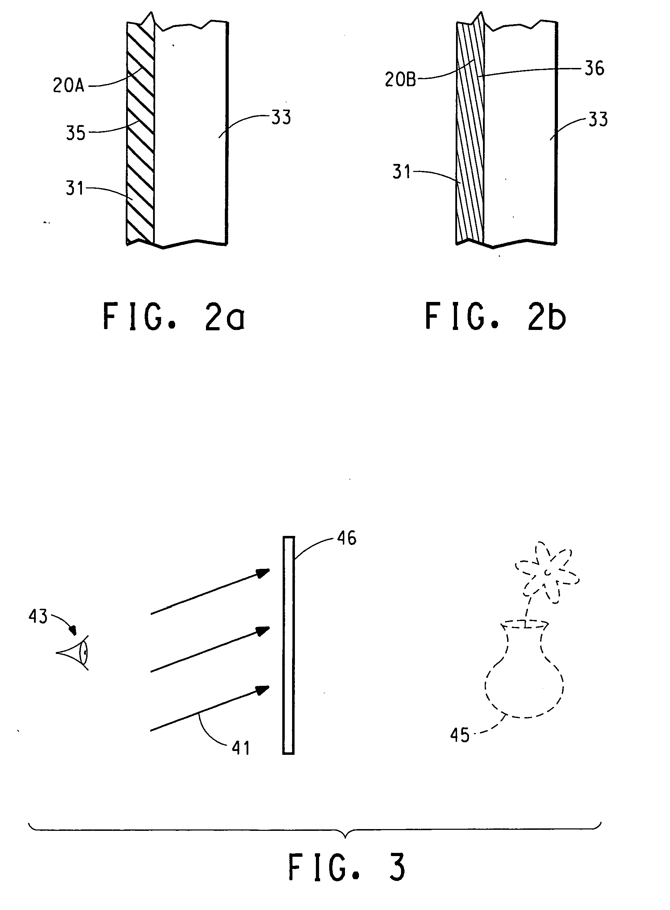

FIGS. 2a and 2b are a comparison of example fringe patterns (20A, 20B) produced in the emulsions of two photographic plates. FIG. 2a is an example of a transmission (front-beam) hologram and FIG. 2b is an example of a reflection (back-beam) hologram. These holograms were produced and then sectioned to determine the difference in the fringe patterns of the two methods. It is known that the interference pattern is produced by maxima and minima of the wave forms in the two light beams as they cross. In FIG. 2a the emulsion 31 is positioned on a transparent base 33 (such as glass). After exposure with a front beam technique, the developed plate was sectioned and examined under a microscope. The dark silver grains or fringes 35 in the emulsion 31 indicate points of interference maxima between the object bearing beam and reference beam, i.e., the antinodes of the standing waves. These fringes 35 often are slanted about 30 to 40 degrees from a normal line to the surface of the photographic plate but the angle of slant in principle can range from about 0 degrees to about 45 degrees; The angle depends largely on the angle between the two beams and the angle at which they strike the plane of the photographic plate. The angle is substantially parallel to a line that bisects the angle between the object-bearing beam and reference beam. The maximum angle permitted by the front-beam technique is limited by the refractive index of the emulsion 31 and consequently by the critical angle for total internal reflection, which for silver halide emulsions is about 40 degrees. In FIG. 2B, wherein a photographic plate was used to record a reflection (back-beam) hologram, the fringes 36 are within a few degrees of being parallel to an outer surface of the photographic plate and being substantially parallel to a line that bisects the angle formed between the object-bearing beam 23 and reference beam 17. These two holograms of FIGS. 2a and 2b may both be called specialized diffraction gratings, but it is obvious that their diffraction characteristics will be quite different. Thus, the reflection (back-beam) hologram can be reconstructed in reflected incoherent light, a property not shared by the transmission (front-beam) hologram.

FIG. 3 shows the reconstruction of an image from a reflection (back-beam) hologram 46. The hologram 46 is illuminated by reflection of incoherent light 41 (daylight or an incandescent light) and the viewer 43, although viewing a reflected image still sees the three-dimensional image 45 of the object 21 through the "hologram window", i.e., as if it were behind the hologram 46. If the emulsion did not shrink during processing of the plate, this image has the color of the light that was used to form the hologram. This method is further explained in U.S. Patent No. 3,532,406, which is incorporated herein by reference.

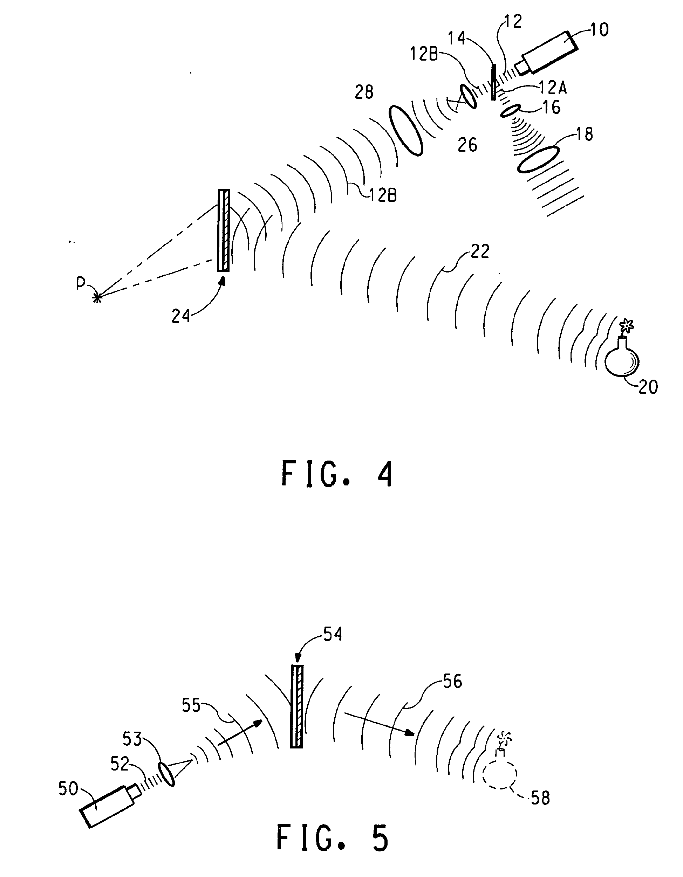

Another embodiment is a transmission hologram and associated method. Still another embodiment is a conventional surface relief method used by the holographic industry. A general embodiment is referenced herein below. FIG. 4 illustrates an arrangement wherein either a transmission hologram or a conventional surface relief hologram is made. Coherent and collimated light 12 from laser 10 is divided into two components 12*A* and 12*B* by beam-splitter 14. Component 12*A* is directed through a telescopic arrangement containing lenses 16 and 18 to increase the cross section of light beam 12*a*. It illuminates subject 20. Subject 20 reflects and scatters light from illuminating beam 12*A*. Wave front 22 is a portion of the light reflected and scattered by subject 20. The form of wave front 22 is functionally related to subject 20. It is incident on a light-sensitive material 24 such as photographic plate. Wave front 22 contains optical information about subject 20. All the information needed to see a three-dimensional stereoscopic view of subject 20 is presented therein.

Component 12B of coherent and collimated light 12 passes through a telescope comprising lenses 26 and 28 increasing its cross section and imparting a preselected shape to its waveform. Light beam 12*B* having a preselected waveform is used as a reference. The waveform of beam 12*B* should be reproducible. To this end it is made to converge on point P. Reference light beam 12*B* is also incident on light-sensitive surface 24. Interference between light in reference beam 12*B* and wave fronts 22 forms a complex diffraction pattern uniquely related to subject 20 on photosensitive surface 24. The pattern is a holographic image of subject 20.

FIG. 5 shows one method suited for illuminating the previously made holographic image 54 and forming a real orthoscopic image 58. Laser 50 emits coherent light 52. Lens 53 directs light 52 through focal point P forming a point source there at and gives it a pre-selected waveform 55. Direction and waveform 55 of illuminating light beam 52 are selected so it represents a time reverse of the reference beam 12*B* used to make the hologram according to FIG. 4. Time reverse beam is a light beam having a direction and waveform, relating to a holographic image, so it appears to emanate from the point to which the original reference beam having the same waveform converged toward. Specifically, if reference beam 12B converged toward "p", beyond photosensitive surface 24, the time reverse of reference beam 12*B* is a light beam appearing, relative to holographic image 54, to emanate P having the same waveform as reference beam 12B. Hologram 54 is made by the method illustrated in FIG. 4. When time reverse illuminating light 55 is incident thereon, the holographic image pattern of hologram 54 diffracts a portion of light 55 into wave fronts 56. In the diffraction process wave fronts 56 are shaped by the holographic image to the same form that wave fronts 22 had. Wave fronts 56 travel in the opposite direction though. A real image 58 is formed by wave fronts 56. The real image 58 is pseudoscopic, i.e., appearing with the relief reversed. It can be recorded by placing a photographic material in the space occupied by the image. All the optical information originally transmitted by subject 20 in wave fronts 22 and incident on photosensitive surface 24 is presented in image 58.

### Bar Codes Recorded as Holographic Images

The bar code or other machine readable code according to this invention is readable using conventional and/or current scanning equipment. As used herein, the terms "conventional scanning equipment" means commercial scanning equipment that was introduced in to the market, offered for sale, and/or was available for commercial use from the time bar code technology was first developed in the 1950s until the present. As used herein, the terms "current scanning equipment" means commercial scanning equipment that is or was on sale for use in commerce by at least one manufacturer within plus or minus 2 years of January 1, 2001 (in an embodiment); within plus or minus 5 years of January 1, 2001 (in another embodiment); and within plus or minus 10 years of January 1, 2001 (in yet another embodiment). For purposes of this application, the word "present" refers to the filing date of this application.

The invention provides a method and associated element for incorporating a machine read-able code (e.g., a bar code) into a hologram, which makes the code very difficult if not impossible to copy by any means other than holography. Furthermore, conventional bar codes can be placed alongside a holographic bar code image according to this invention. The result that this invention affords is a bar code (element) that is scan-able (i.e., the bar code can be read) by conventional (in one embodiment) and/or current (in another embodiment) bar code scanners, but cannot be copied by conventional, non-holographic means, such as xerography. The bar code of this invention may also be placed sufficiently deep within the hologram so that it is not easily recognizable in ordinary room light and may require an auxiliary light source in order to be read. The bar code of this invention is recorded as a complete image of bar code within the thickness (i.e., within a single layer) of the photosensitive layer of the information-recorded medium. More specifically, all bars and spaces of the bar code are recorded within the single photosensitive layer of the information-recorded medium; the bar code is not obtained by placing separate holographic bar elements side by side in parallel to afford a composite bar code having multiple holographic elements. The holographic bar code of this invention can either be a stand-alone label with no other image portions or it may be one portion of a multifaceted label having other portions, such as design elements.

The holographically-recorded bar codes of this invention can include any type of bar codes, non-limiting examples of which are characterized to possess linear (one-dimensional) bar code symbologies, two dimensional (2D) bar code symbologies, and composite bar code symbologies. In one embodiment, the holographically-recorded bar code possesses a linear (one-dimensional) bar code symbology.

As indicated supra, the invention in an embodiment is an information-recorded medium comprising a holographically-recorded bar code having a background in an exposed photosensitive layer, the bar code consisting of a plurality of parallel bars and a plurality of parallel spaces; the plurality of parallel bars and the plurality of parallel spaces including a narrowest bar or space having a width, the width being termed an X dimension;
and,
the bar code possessing a reconstruction wavelength λ, wherein the exposed photosensitive layer is obtained from exposure of a photosensitive layer to coherent actinic radiation and results from interferometrically recording an image into the photosensitive layer to produce the exposed photosensitive layer containing the holographically-recorded bar code;
wherein the bar code meets all standards specified from at least one professional industry organization relevant to bar code technology selected from the group consisting of UCC, AIM, ANSI, CEN, and ISO.

In one particular embodiment, the bar code is as described in the paragraph immediately above and meets all standards specified from UCC.

In an embodiment the bar code has an X dimension within a range from 0.10 mm to 3.0 mm.

In other embodiments, the information-recorded medium described supra has one of the following specifications for the X dimension of the holographically-recorded bar code:
a) The X dimension ranges from 0.1 mm (0.004 inch) to 0.18 mm (0.007 inch).
b) The X dimension ranges from 0.18 mm (0.0071 inch) to 0.33 mm (0.013 inch).
c) The X dimension ranges from 0.33 mm (0.0131 inch) to 0.635 mm (0.025 inch).
d) The X dimension ranges from 0.635 mm (0.0251 inch) to 1.0 mm (0.0394 inch).
e) The X dimension ranges from 0.264 mm (0.01 inch) to 0.66 mm (0.026 inch).

In the medium of this invention, the plurality of parallel bars and the plurality of parallel spaces of the bar code totals to be a number equal to or greater than 10. In various other embodiments, the plurality of parallel bars and the plurality of parallel spaces of the bar code totals to be a number equal to or greater than one of the following numbers: 19, 25, 30, 35, 40, 45, and 50.

In the medium of this invention, the bar code has a width of at least 2.5 mm. In various other embodiments, the bar code has a width of at least one of the following values: 4.5 mm, 8 mm, 12 mm, 20 mm, 25.4 mm (1.0 inch), 38.1 mm (1.5 inches), 50.8 mm (2.0 inches), 63.5 mm (2.5 inches), and 76.2 mm (3.0 inches).

The composition of the photosensitive layer of the medium is not particularly limited. Suitable non-limiting examples of materials for the photosensitive layer are a photopolymer, a dichromated gelatin, and a photographic film (e.g., a silver halide film).

In an embodiment, the medium is characterized such that the holographically-recorded bar code and the background possess the same color. In another embodiment, the medium is characterized such that the holographically-recorded bar code and the background possess different colors. In yet another embodiment, the medium is characterized such that the intensity of coloration of the holographically-recorded bar code is greater than the intensity of coloration of the background.

There are several embodiments of the medium according to the invention with regard to the reconstruction wavelength λ of the holographically-recorded bar code. In an embodiment, the reconstruction wavelength λ of the holographically-recorded bar code is the same or essentially the same as the reconstruction wavelength λ of the background. In another embodiment, the reconstruction wavelength λ of the holographically-recorded bar code is in the visible region of the electromagnetic spectrum. In one particular embodiment, at least a portion of the reconstruction wavelength λ of the holographically-recorded bar code corresponds to red light (within the visible region). In two other embodiments, the reconstruction wavelength λ of the holographically-recorded bar code is in the infrared region of the electromagnetic spectrum in one embodiment and is in the ultraviolet range of the electromagnetic spectrum in the other embodiment.

In an embodiment according to the invention, the medium containing the bar code is recorded as a volume phase hologram, which can be either a reflection or transmission hologram. In another embodiment according to the invention, the medium containing the bar code is recorded as a surface relief hologram.

With regard to all method claims for scanning a reconstructed image of a holographically-recorded bar code according to this invention, all parameters, values, elements, etc, for these method claims are the same as those for the corresponding medium claims as given supra. A significant feature of the recording method of this invention is that a given bar code is recorded as a complete image of bar code within a single layer of the photosensitive layer of the information-recorded medium. This is advantageous in that this method is simpler, requires less time, and affords greater accuracy and precision in bar code imaging in comparison to prior art methods.

With regard to the aforementioned method for making a master hologram, in case of a linear (one-dimensional bar code), a model can be can be a transparency containing the bar code(s) to be holographically-recorded.

The holograms of the information-recorded media of this invention can be made using any of the conventional holographic recording techniques; these techniques include, but are not limited to, a two beam transmission hologram method and a two beam reflection hologram method.

### GLOSSARY

AIM - Automatic Identification Manufacturers, Inc., a U.S. trade association headquartered in Pittsburgh, PA.

ANSI - American National Standards Institute responsible for the development of voluntary bar code quality standards.

Aperture - A physical opening that is part of the optical path in a device (e.g., a scanner). An aperture may be circular, rectangular, elliptical,

ASCII - A character set and code described in the American National Standard Code for Information Interchange ANSI X3.4-1977.

Aspect ratio - The ratio of bar height to symbol length.

Background - The lighter portion of a bar code symbol, including the spaces between the bars, quiet zones, and areas surrounding a printed symbol.

Bar - The dark (low reflectance) rectangular element of a bar code symbol.

Bar code - A precise arrangement of parallel lines (bars) and spaces that vary in width to represent data.

Bar code character - A group of bars and spaces that represents a letter, number, or other information.

Bar code density - The number of characters that can be represented in a linear unit of measure.

Bar height - The dimension of a bar (line) measured from its top to its bottom.

Bar width - The thickness of a bar (line) measured from one of its edges to the other.

Bidirectional - A bar code symbol is bi-directional if it is capable of being read successfully independent of scanning direction.

Check digit - A digit calculated from the other digits in bar code that is used to check that the data has been correctly composed.

Codabar - Codabar is a numeric code with special characters and four different start/stop characters.

Code 11 - A numeric, high density code.

Code 39 (3 of 9 Code) - A full alphanumeric bar code consisting of nine modules, three of which are wide.

Code 93 - A full alphanumeric bar code capable of encoding all 128 ASCII characters.

Code 128 - A full alphanumeric bar code capable of encoding all 128 ASCII characters.

CPI - Characters per inch. The number of characters which can be represented in a linear unit of measure of one inch.

Decode - Converting the bars and spaces in a bar code symbol into its corresponding data.

EAN - The International Article Numbering System (formerly the European Article Numbering System). The international standard bar code for retail food packaging.

EAN International - EAN International, based in Brussels, Belguim, is an organization of EAN International Member Organizations that co-manages the EAN.UCC System and Global Standards Management Process with the Uniform Code Council, Inc.®(UCC®). See Uniform Code Council, Inc. (UCC)

Element - A single bar or space in a bar code symbol or part of a matrix symbol.

Flat bed scanner - A fixed scanner (typically used at supermarket checkouts) which can read bar code symbols at any angle in a plane parallel to or near parallel to the scanner window.

Helium neon (He-Ne) laser - A type of laser used in bar code scanners. It emits coherent red light at a wavelength of 633 nm.

Human readable - The text equivalent to the encoded information within the bar code symbol, normally printed below or above the bar code symbol.

ISO (International Organization for Standardization) - This is a worldwide federation of national standards bodies from some 100 countries, one from each country whose mission is to promote the development of standardization globally. For more information see http://www.iso.ch.

Laser scanner - A bar code reading device that uses low energy laser light to read the bar code.

Mil - A unit of measure equal to 1/1000 of one inch.

Nanometer - Unit of measure used to define the wavelength of light. Equal to 10⁹ meters.

Quiet zone - A clear space void of any marks, which precedes the start character a bar code symbol and follows the stop character.

Reflectance - The ratio of the amount of light of a specified wavelength or series of wavelengths reflected from a test surface to the amount of light reflected from a barium oxide or magnesium oxide standard.

Resolution - The narrowest element dimension which can be distinguished by a particular reading device or printed with a particular device or method.

Scan reflectance profile - The record of the reflectance values (0 to 100 percent) measured along a single line across the entire width of a bar code symbol.

Scanner - An electronic device to read bar code symbols and convert them into electrical signals understandable by a computer device.

Self-checking - A bar code or symbol using a checking algorithm which can be independently applied to each character to guard against undetected errors.

Solid-state laser scanner - A type of laser that emits light at a wavelength of 670 nm and also at 780 nm.

Stacked code - A code characterized in that a bar code symbol has been broken into sections and "stacked" one upon another in order to increase the information density in the bar code symbol.

Standard - A set of rules, specifications, instructions and directions which explains how to properly use a bar code. Usually issued by an organization, e.g., UCC, etc.

Start character - A special bar code character that tells the scanner to start reading a bar code symbol. The start character is typically found on the left side of a bar code symbol.

Stop character - A special bar code character that tells the scanner to stop reading a bar code symbol. The stop character is typically found on the right side of the bar code symbol.

Symbol - The combination of symbol characters and features required by a particular symbology, including quiet zone, start and stop characters, data characters, and other auxiliary patterns, that together form a complete scan-able entity.

Symbol character - A group of bars and spaces in a symbol that is decoded as a single unit. It may represent an individual digit, letter, punctuation mark, control indicator, or multiple data characters. Symbology - A defined method of representing numeric or alphabetic characters in a bar code; a type of bar code.

Symbologies, Linear (one-dimensional) bar code - These are bar codes having a series of varying-width parallel bars and spaces. These are the most common bar codes that have been used for over 25 years.

Symbologies, Two dimensional (2D) bar code - There are two types of 2D bar codes in current use, which are stacked codes and matrix codes. Stacked codes are characterized to be those stacked in horizontal layers to create multi-row symbologies. Examples are Code 49 and Code 16K. A matrix code is made up of a pattern of cells that can be square, hexagonal, or circular in shape. Data is encoded via the relative positions of these light and dark areas.

Symbologies, Composite barcode - This is a relatively new class of symbology in which two symbols are printed in close proximity (fixed relative positions) to each other and contain linked data. Typically, one component is a linear symbol and the other either a multi-row or a matrix symbol.

UCC® - The Uniform Code Council, Inc.® - An organization dedicated to the development and implementation of standards-based, global supply chain solutions. It is the organization which administers the U.P.C. and other retail standards. See www.uc-council.org for more information.

Universal Product Code (U.P.C.) - This is the standard bar code symbol for retail food packages in the United States. This code was modified and adapted by Europe for international identification of food packages in the form of EAN. It is also a generic term that refers to the UCC-12 Data Structure encoded in a UPC-A or UPC-E Bar Code Symbol.

USS (Uniform Symbol Specification) - The current series of symbology specifications published by AIM; currently (in 2005) includes USS-I 2/5, USS-39, USS-93, USS-Codabar and USS-128.

Void - An area within a bar (of a bar code symbol), which is of high reflectance relative to the dark reflectance criteria, i.e. the bar or character is poorly inked, or where the intended printed area is missing. A void may cause a mis-read or cause the reader to fail to read the symbol.

X dimension - The specified width of the narrowest element (bar or space) in a bar code symbol.

### EXAMPLES

### EXAMPLE 1

This example illustrates making a holographic master of a bar code and then subsequent use of the master to replicate a holographic bar code image. It also illustrates scanning the holographic bar code using two different commercial scanners.

### Making the bar code hologram

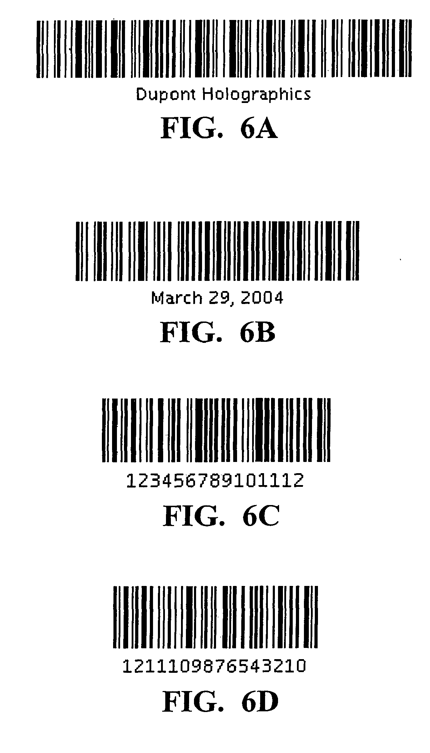

First linear (one dimensional) bar codes were generated with an online bar code generator, (http://www.idautomation.com/java/linearservlet.html) representing the words "Dupont Holographics" (Fig. 6a), "March 29, 2004" (Fig. 6b), "123456789101112" (Fig. 6c), and "1211109876543210" (Fig. 6d). The bar codes that were generated are shown in Figures 6a-6d.

### Holographic Imaging

The holographic imaging was done using a positive transparency that was produced from bar code artwork. The bar code generator produced an on screen digital image of the bar code that was cut and pasted into Photoshop, converted to TIF format and then optically transferred to film by an Agfa SelectSet 7000 Drum Imagesetter, (Agfa, Regional Offices: Ridgefield Park, 100 Challenger Road, Ridgefield Park, NJ 07660). The resulting transparency was then placed on a 5x5 " ground glass diffuser. The ground glass diffuser was made by sand blasting both sides of a 1/8 inch thick ordinary window glass. This window glass was sand-blasted on one side with Cyclone Manufacturing Brown Aluminum Oxide 150-180 grit. No directly transmitted light or specular reflections were believed to occur with use of this sand-blasted diffuser.

### Illumination and Exposure of the H1

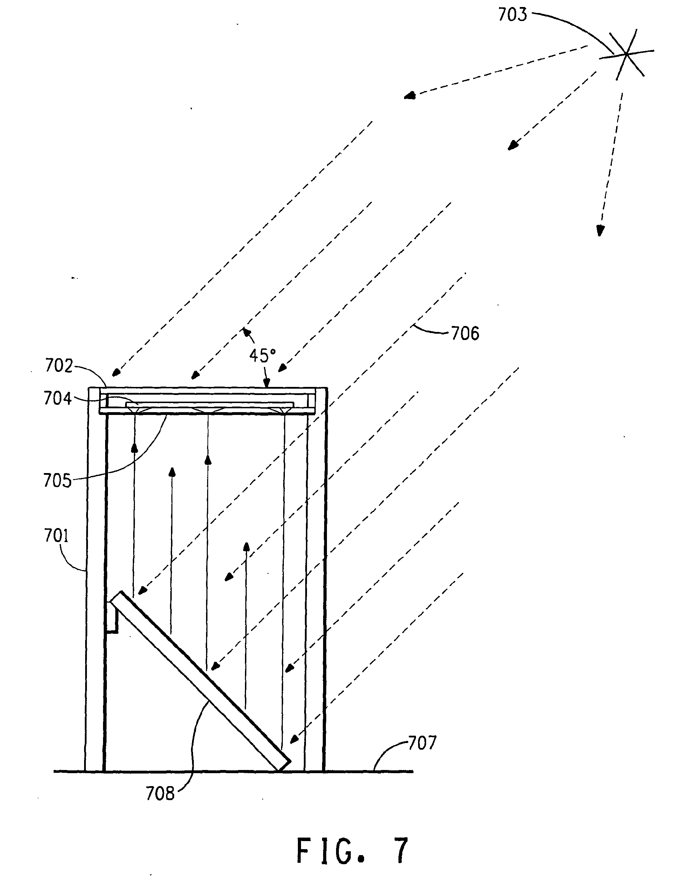

See Fig 7. The above diffuser/transparency assembly was then attached to a vibration isolated optical table 707 with a stable metal mount. Over the model assembly another stable mount was also attached to the table. The mount 701 held a dichromated gelatin (DCG) coated glass plate 702 (future H1) during the first exposure. Dichromated gelatin (DCG) is a common holographic recording material that is described in numerous references.

See, for example, "Control of DCG and non silver holographic materials" by Rallison at the following website:
http://www.xmission.com/~ralcon/dcgprocess/p1.html.

Before the DCG plate was put into position, a spatially filtered slowly diverging beam of laser light 703 was angled from above at 45 degrees from normal to the model. The expanded beam illuminated the DCG recording material and covered the mirror 708 below the transparency. The mirror directed a part of the expanded laser light beam to the backside of the diffuser bar code transparency assembly 704. Then it was flood illuminated with a "Coherent Sabre Argon laser" 706 (Coherent Inc., Santa Clara, CA) at a power level of 3 watts with light output at 488 nm. The laser light was first passed through a ground glass diffuser 705 from the ground glass side. With the laser shuttered, the (6x6") DCG plate was placed ~1/4" above the transparency and diffuser combination. A portion of the 488nm laser beam used to back illuminate the transparency became the reference beam.

DCG generally requires approximately 50-70 mJ for an adequate exposure. Using a Coherent, Inc. Field Master power meter, the power was set on the future DCG surface to ~2500 uw/cm which gave us a typical exposure time of 20 seconds.

Next the expanded laser beam was turned off. During setup of the model used in this example, the DCG plate was humidified in a room with a RH of ~ 54% for 2 hours. Exposure and humidification times can vary from batch to batch of DCG. So, trial and error was required to find the correct exposure and processing conditions. The trial and error is well within the expertise of those skilled in the art. A 5x5-inch glass plate coated with nearly transparent DCG was mounted ¼ inch above the surface of the eagle model and centered it over the model. Prior to exposure, a 5-minute settling time was provided to allow heat and vibrations to dissipate from the model, optics, optical table, and the room. Next a shutter was opened in front of the laser for 20 seconds to initiate exposure. Approximately 90% of the laser light passed through the coated plate. The incoming light and the transmitted object light met from opposite sides to form an interference pattern that was recorded within the DCG coating as fringes.

### Chemical Processing

After exposure the DCG (dichromated gelatin), a common holographic recording material, plate was placed in a Kodak fixer bath for 45-60 seconds. It was then placed immediately into 80-120°F (degrees Fahrenheit) water for ~ 4 seconds and in another water bath at 80 to 120°F for 4 seconds. Next, it went into an 80% isopropyl alcohol 20% water bath at 130-140°F for 4 seconds. It then went into 2 sequential 100% alcohol baths at 130-140°F for 2 seconds each. Then the exposed DCG plate was dipped into a final 100% alcohol bath for several seconds, which was sufficiently long enough to allow the plate to be slowly removed from the bath to promote even drainage and drying. The plate was now viewable, but the film was swollen and the reconstruction of the image was too green for the next exposure step. The following dehydration process accomplished color tuning to the original exposure wavelength of 488nn. The plate was placed back in the 80% alcohol 20% water bath for 4 seconds then rinsed in a 100% alcohol bath and again slowly removed. At this point in the process the image in the H1 was almost completely unrecognizable in ordinary room light because all image elements were far from the hologram's surface (i.e., approximately ¼ inch).

(This same chemical processing was used for processing of the H2 DCG plates as discussed infra.)

### Transfer of H1 to H2

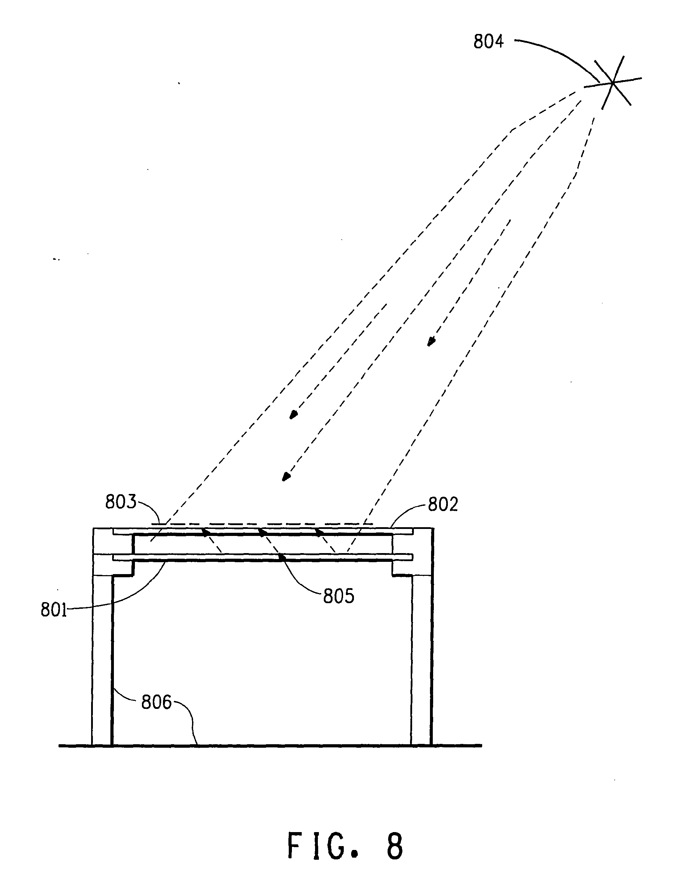

See Figure 8. A DCG holder, mount and isolation table 806 was used. After this first DCG hologram 803 was recorded and processed, it was flipped over and reverse conjugately illuminated, a second DCG unexposed plate 802 was placed in the virtual peudoscopic image of the bar code. Three separate plates were exposed at different distances from the H1 801. Reflected and diffracted light from the H1 forms the image being recorded in the H2. This produced 3 H2s with the bar code images ~1/8 above the surface, on the surface, and one 1/8" below the surface. 804 is the laser light source. The chemical processing was the same as for the above H1.

### Replication of the Three H2s

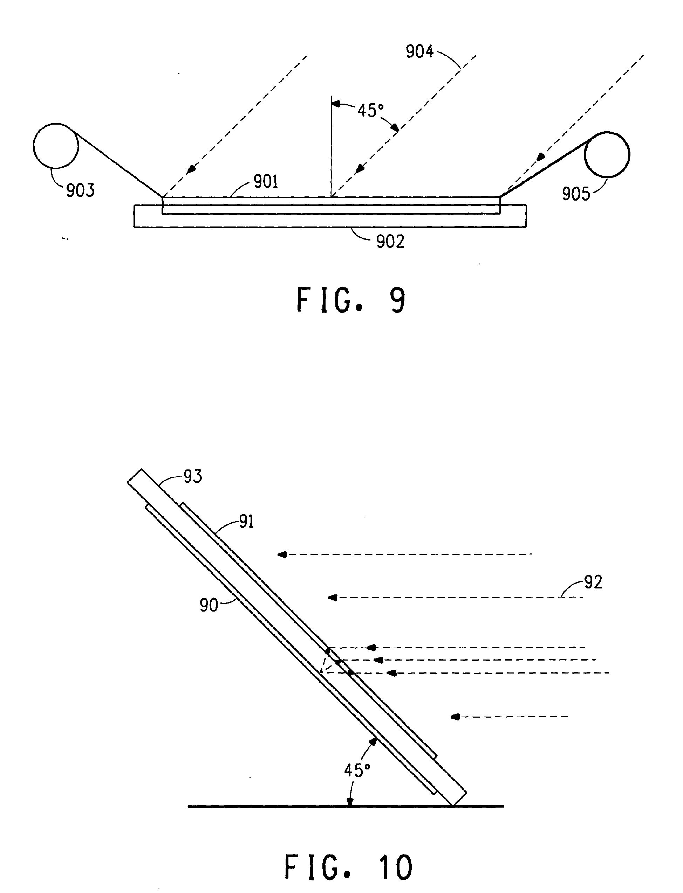

See Figure 9. The master holograms (H2s) 901 were placed side by side into a holder on a holographic replicator 902 (Dupont Holographics, Logan, UT). HRF 734 unexposed photopolymer copy film 903 (E. I. DuPont deNemours & Co., Inc., Wilmington, DE) was then pressed/laminated onto its surface. A collimated laser beam 904 at 45 degrees and at 476nm wavelength with an approximate intensity of 1.25 mw was turned onto this film master lamination for 40 seconds. The copy film 905was then lifted from the H2s and moved by web into a UV 2.6 plus watt at 368 nm flood station for 40 seconds. The exposed and UV fixed film was next laminated to color tuning film CTF 146 (E. I. du Pont de Nemours & Co., Inc., Wilmington, DE) and moved through a baking oven at 3 meters per minute at 101°C (degrees Centigrade). Next it was passed through a 150°C scroll oven at 0.3 meter per minute. After the film was removed from the oven, it was laminated on its backside with a double-sided black adhesive. A single-sided clear protective topcoat was applied on its front side. The replicated holograms, each containing a holographically-recorded bar code, were completed.

### Scanning the Holographic Bar Codes (in Photopolymer Film)

A conventional laser diode bar code scanner, Metrologic Instruments Inc. Voyager CG Model MS9540, (West Deptford, NJ) was attached to a PC running a word processor or spreadsheet program, such as Microsoft Word or Microsoft Excel. The equipment was then used to scan the holographic bar codes recorded within holographic replicating film. All of the bar codes of Figures 6a-6d except for that in Figure 6a were easily readable and the translated bar code appeared in the word processor's or spreadsheet's window. Both Microsoft Word and Microsoft Excel were tried and both worked equally well in this application.

An imaging type scanner (Intermec model Scanplus 1800 Sr) (Everett, WA) also successfully read the holographic bar codes of Figures 6b-6d.

The bar code of Figure 6a was readable in some attempts but not readable in other attempts. The reason(s) for the mis-reads is not exactly known, but is believed to be most likely due to significant contrast variations from left to right within the bar code as well as the Figure 6a bar code being the longest of the four bar codes (of Figures 6a-6d) tested in this example. The contrast variations that were observed were speculated to be due to nonuniformities in the H2s as a result of quality control issue(s). The percentage of mis-readings was lower for the case where the bar code image was projected on or near the surface of the hologram versus being within the recording film or above the surface of the recording film.

### EXAMPLE 2

### Making the bar code hologram

First bar codes were generated with an online bar code generator, (http://www.idautomation.com/java/linearservlet.html) representing the words "Dupont Holographics" (Fig. 6a), "March 29, 2004" (Fig. 6b), "123456789101112" (Fig. 6c), and "1211109876543210" (Fig. 6d). These bar codes were next printed on paper using a conventional office laser printer. The bar codes that were generated are shown in Figures 6a-6d.

Next a 1/8"x 4x5 inch DCG (dichromated gelatin) plate was humidified in a room with a RH of ~ 54% for 2 hours. Exposure and humidification times can vary from batch to batch of DCG. So, trial and error was required to find the correct exposure and processing conditions. This trial and error for DCG exposure/processing is well within the expertise of those skilled in the art. Dichromated gelatin (DCG) is a common holographic recording material that is described in numerous references. See, for example, "Control of DCG and Non-Silver Holographic materials" by Rallison at the following website:
http://www.xmission.com/~ralcon/dcgprocess/p1.html.

See Figure 10. The paper onto which these bar codes 90had been printed was attached, with ordinary scotch double stick tape, to the uncoated side of a DCG plate 91. Holographic exposure was effected using an expanded 3 Watt 532nm "Coherent Verdi" laser beam 92 (Coherent Inc., Santa Clara, CA), which first passed through the photo sensitive DCG plate becoming the reference beam; then ~ 90% of the remaining light illuminated the barcodes on paper on the opposite side of the glass 93.

The light from the white areas of paper was reflected back to the DCG plate forming an interference pattern after 30 seconds of exposure and appropriate chemical processing. As indicated in Fig. 10, the DCG plate during exposure was oriented at an angle of 45 degrees relative to horizontal and the laser beam was horizontal; thus the angle between the laser beam and the DCG plate was 135 degrees during the holographic exposure. After processing this pattern became diffraction fringes that on reconstruction produced a holographic replica of the bar code, which was approximately 1/8 inch below the surface of the DCG, which was orange-red in color and which exhibited a reconstruction wavelength of approximately 610nm. This is a known way of making a "one step" or "Denisyuk" hologram as described in US patent application # US20030016408A1.

### Chemical Processing

After exposure the DCG (dichromated gelatin), a common holographic recording material, plate was placed in a Kodak fixer bath for 45-60 seconds. It was then placed immediately into 80-120°F water for ~ 4 seconds and in another water bath at 80 to 120°F for 4 seconds. Next, it went into an 80% isopropyl alcohol-20% water bath at 130-140°F for 4 seconds. It then went into 2 sequential 100% alcohol baths at 130-140°F for 2 seconds each. Then the exposed DCG plate was dipped into a final 100% alcohol bath for several seconds, which was sufficiently long enough to allow the plate to be slowly removed from the bath to promote even drainage and drying. Because the exposure wavelength was at a relatively long wavelength of 532nm, the swollen reconstructed image contained a sufficient level of reflection of red light such that the holographically-recorded bar codes could be detected and consequently read by a conventional laser bar code scanner (which typically operates using red laser light). At this stage, the hologram is a H1.

### Scanning the Holographic Bar Codes (in Dichromated Gelatin)

A conventional laser diode bar code scanner, Metrologic Instruments Inc. Voyager CG Model MS9540, (West Deptford, NJ) was attached to a PC running a word processor or spreadsheet program, such as Microsoft Word or Microsoft Excel. This equipment was then used to scan the holographic bar codes recorded within the DCG plate . All of the bar codes of Figures 6b-6d were easily readable and the translated bar code appeared in the word processor's or spreadsheet's window. Both Microsoft Word and Microsoft Excel were tried and both worked equally well in this application. Figure 6a experienced the same reading problems as found in Example 1.

An imaging type scanner (Intermec model Scanplus 1800 Sr) (Everett, WA) also successfully read the holographic bar codes of Figures 6b-6d that were recorded in dichromated gelatin.

### Example 3 (Prophetic)

In this example, the same procedures and methodology for recording a holographically-recorded bar code in photopolymer film as in Example 1 are used except that the code being recorded is a Data Matrix code instead of a bar code. Additional details about Data Matrix code can be obtained from RVSI Acuity CiMatrix Co., Nashua, NH. This holographic code is prophesized to be successfully read/scanned using either of the scanners of Example 1 or a typical 2-dimensional code reader.

### Example 4 (Prophetic)

In this example, the same procedures and methodology for recording a holographically-recorded bar code in photopolymer film as in Example 1 were done except that the bar code being recorded is Code 49 (a two dimensional bar code instead of a linear (one dimensional) bar code. A holographically-recorded Code 49 bar code is obtained. This holographic code is prophesized to be successfully read/scanned using either of the scanners of Example 1 as well as any conventional commercial scanner.

### Example 5 (Prophetic)

In this example, the same procedures and methodology for recording a holographically-recorded bar code in photopolymer film as in Example 1 are done except that the bar code being recorded is a composite bar code having a linear symbol and a matrix symbol instead of a linear (one dimensional) bar code. A holographically-recorded composite bar code is obtained. This holographic code is prophesized to be successfully read/scanned using any conventional commercial scanner capable of reading composite bar codes.

## Claims

1. An information-recorded medium comprising a holographically-recorded bar code and a background found within a single exposed photosensitive layer, the bar code consisting of a plurality of parallel bars and spaces; and,
the bar code possessing a reconstruction wavelength λ, wherein the exposed photosensitive layer is obtained from exposure of the photosensitive layer to coherent actinic radiation and results from interferometrically recording an image into the photosensitive layer to produce the exposed photosensitive layer containing the holographically-recorded bar code, wherein the bar code meets all standards specified from at least one professional industry organization relevant to bar code technology selected from the group consisting of UCC, AIM, ANSI, CEN, and ISO.

2. An information-recorded medium comprising a holographically-recorded bar code and a background found within a single exposed photosensitive layer, the bar code consisting of a plurality of parallel bars and spaces; and,
the bar code possessing a reconstruction wavelength λ, wherein the exposed photosensitive layer is obtained from exposure of the photosensitive layer to coherent actinic radiation and results from interferometrically recording an image into the photosensitive layer to produce the exposed photosensitive layer containing the holographically-recorded bar code;
wherein the bar code is scan-able using conventional scanning equipment.

3. The medium of Claim 2 wherein the bar code is read-able and view-able by a human.

4. The medium of Claim 2 wherein each member of the plurality of parallel bars has the same diffraction properties as those for all of the other members.

5. The medium of Claim 2 wherein the bar code has a X dimension of at least 0.0067 inch (6.7 mils, 0.17 mm).

6. The medium of Claim 2 wherein the X dimension ranges from 0.10 mm (0.004 inch) to 3.0 mm (0.1182 inch).

7. The medium of Claim 2 wherein the plurality of parallel bars and the plurality of parallel spaces of the bar code totals to be a number equal to or greater than 10.

8. The medium of Claim 2 wherein the bar code has a width of at least 2.5 mm.

9. The medium of Claim 2 wherein the holographically-recorded bar code and the background possess the same color.

10. The medium of Claim 2 wherein the holographically-recorded bar code and the background possess different colors.

11. The medium of Claim 2 wherein the reconstruction wavelength λ of the holographically-recorded bar code is the same or essentially the same as the reconstruction wavelength λ of the background.

12. The medium of Claim 2 wherein the holographically-recorded bar code is a volume phase hologram.

13. A method for scanning a reconstructed image of a holographically-recorded bar code contained within an information-recorded medium, the method comprising:
providing an information-recorded medium comprising a holographically-recorded bar code and a background found within a single exposed photosensitive layer, the bar code consisting of a plurality of parallel bars and spaces wherein the bar code possesses a reconstruction wavelength λ, wherein the exposed photosensitive layer is obtained from exposure of the photosensitive layer having a surface to coherent actinic radiation and results from interferometrically recording an image into the photosensitive layer to produce the exposed photosensitive layer containing the holographically-recorded bar code and wherein the bar code meets all standards specified from at least one professional industry organization relevant to bar code technology selected from the group consisting of UCC, AIM, ANSI, CEN, and ISO;
and,
scanning the bar code with a scanner wherein the bar code is read by the scanner.

14. A method for scanning a reconstructed image of a holographically-recorded bar code contained within an information-recorded medium, the method comprising:
providing an information-recorded medium comprising a holographically-recorded bar code and a background found within a single exposed photosensitive layer, the bar code consisting of a plurality of parallel bars and spaces; and wherein the bar code possesses a reconstruction wavelength λ, wherein the exposed photosensitive layer is obtained from exposure of the photosensitive layer having a surface to coherent actinic radiation and results from interferometrically recording an image into the photosensitive layer to produce the exposed photosensitive layer containing the holographically-recorded bar code and wherein the bar code is scan-able using conventional scanning equipment;
and,
scanning the bar code with a scanner wherein the bar code is read by the scanner.

15. The method of Claim 14 wherein the bar code is read-able and view-able by a human.

16. The method of Claim 14 wherein the bar code has a X dimension of at least 0.067 inch (6.7 mils, 0.17 mm).

17. The method of Claim 14 wherein the X dimension ranges from 0.10 mm (0.004 inch) to 3.0 mm (0.1182 inch).

18. The method of Claim 14 wherein an image of the holographically-recorded bar code is recorded at the surface of the photosensitive layer.

19. The method of Claim 14 wherein an image of the holographically-recorded bar code is recorded above or below the surface of the photosensitive layer.

20. The method of Claim 14 wherein the scanner is a laser scanner that operates with a mechanical moving mirror for moving a laser beam that is used in scanning.

21. A method for making a master hologram comprising at least one holographically-recorded bar code, the method comprising the steps of:
g. obtaining a model of all element(s) that are to be in the master hologram, the element(s) comprising at least one bar code;
h. placing a first photosensitive film suitable for holographic recording between the model and a coherent light source, the first photosensitive film having a surface;
i. exposing the first photosensitive film with light from the coherent light source to record a first holographic image (H1) of the physical model, the first holographic image comprising at least one holographically-recorded bar code of the first holographic image;
j. inverting the first holographic image with respect to the coherent light source and removing the physical model;
k. placing a second photosensitive film suitable for holographic recording between the coherent light source and the first holographic image, the second photosensitive film being proximate to the first holographic image; and
I. exposing the second photosensitive film with light from the coherent light source to record a second holographic image (H2) as the master hologram, the second holographic image comprising at least one holographically-recorded bar code of the second holographic image as the master hologram.
